# EUROPÄISCHE PATENTSCHRIFT

(11) **EP 1 411 217 B1**
(45) Veröffentlichungstag und Bekanntmachung des Hinweises auf die Patenterteilung: **07.09.2005**
(21) Anmeldenummer: 04001061.3
(22) Anmeldetag: 11.05.2000
(51) Int. Cl.: F01N 3/20

(54) **Abgasreinigungsanlage mit Stickoxidreduktion unter Reduktionsmittelzugabe**
Exhaust gas purification arrangement with NOx reduction and addition of reduction agent
Dispositif de purification de gaz d'échappement avec réduction de NOx en utilisant l'addition d'un agent réducteur

(30) Priorität: 19.05.1999 DE 19922959
(43) Veröffentlichungstag der Anmeldung: 21.04.2004
(62) Teilanmeldung aus: 00109949.8
(73) Patentinhaber: Volkswagen AG, 38436 Wolfsburg (DE)
(72) Erfinder: Goerigk, Christian, 71404 Korb (DE); Wessels, Stefan, 71287 Weissach-Flacht (DE)

(56) Entgegenhaltungen:
- DE-A- 19 510 804
- US-A- 5 628 186

## Beschreibung

Die Erfindung bezieht sich auf eine Abgasreinigungsanlage nach dem Oberbegriff des Anspruchs 1. Derartige Abgasreinigungsanlagen werden beispielsweise für Verbrennungsmotoren von Kraftfahrzeugen verwendet und ermöglichen eine Reinigung des Abgases von eventuell enthaltenen Stickoxiden nach dem sogenannten SCR(Selective Catalytic Reduction)-Verfahren. Bei diesem Verfahren werden die Stickoxide in einem entsprechenden Reduktionskatalysator chemisch unter Beteiligung eines geeigneten Reduktionsmittels reduziert, das dem Abgasstrom zugegeben wird. Als Reduktionsmittel wird häufig dampf- bzw. gasförmiger Ammoniak verwendet, der durch Verdampfung und nachfolgende Thermolyse und Hydrolyse von vorzugsweise in Lösung in den Abgasstrom eingebrachtem Harnstoff erzeugt wird.

Eine Abgasreinigungsanlage dieser Art ist in der Offenlegungsschrift WO 97/36676 offenbart. Dort wird flüssige Harnstofflösung in einer elektrisch beheizbaren Zudosiereinheit, die an einer Abgasleitungswandung angeordnet ist, unter Hydrolyse des Harnstoffs verdampft und in den Abgasstrom eingedüst. Durch einen nachgeschalteten Mischer kann die Vermischung des eingedüsten Reduktionsmittels mit dem Abgas unterstützt werden.

Bei einer in der Patentschrift EP 0 555 746 B1 offenbarten Abgasreinigungsanlage dieser Art ist ein abgasbeheizter Metallwaben-Verdampfer vorgesehen, der gleichzeitig als Hydrolysekatalysator für eingedüste Harnstofflösung und als Strömungsmischer fungiert. Dem Metallwaben-Verdampferkörper ist im Abgasstrang eine mehrteilige Katalysatoreinheit nachgeschaltet, die einen stromaufwärtigen Stickoxid-Reduktionskatalysator und einen stromabwärtigen Oxidationskatalysator umfasst.

Bei einer in der Patentschrift EP 0 615 777 B1 offenbarten Abgasreinigungsanlage wird Harnstoff in fester Partikelform in den Abgasstrom eingedüst, der anschließend einem Hydrolysekatalysator und von dort einem Stickoxid-Reduktionskatalysator und einem nachgeschalteten Oxidationskatalysator zugeführt wird.

In der Offenlegungsschrift EP 0 737 802 A2 ist eine weitere gattungsgemäße Abgasreinigungsanlage beschrieben. Als Reduktionsmittel wird dort ein Kohlenwasserstoff eingesetzt, beispielsweise derselbe, der als Brennstoff für den Verbrennungsmotor eingesetzt wird, dessen Abgasstrom zu reinigen ist. Die zugehörige Zudosiereinrichtung beinhaltet als Verdampfer einen quer in eine Abgasleitung eingeschraubten, zylindrischen Heizkörper mit halbkugelförmig gerundetem Vorderende, dem mit Abstand die Mündungsöffnung einer U-förmigen Kohlenwasserstoff-Zufuhrleitung gegenüberliegt. Umfangsseitig ist der zylindrische Heizkörper von einem zylindrischen Metallgewebekörper umgeben, der seinerseits von einem zylindrischen Schutzmantel aus gelochtem Metallmaterial umgeben ist. Im Betrieb wird flüssiger Kohlenwasserstoff über die Zufuhrleitung mit dem zylindrischen Heizkörper und dem zylindrischen Metallgewebekörper in Kontakt gebracht und dadurch verdampft. Der erzeugte Kohlenwasserstoffdampf wird durch die Öffnungen im zylindrischen Schutzmantel hindurch in den Abgasstrom geleitet.

In der Offenlegungsschrift DE 195 10 804 A1 ist eine Abgasreinigungsanlage offenbart, bei der ein gasförmiges Reduktionsmittel zur Stickoxidreduktion vor Inkontakttreten mit einem zugehörigen Katalysator in einen Hochdruckplasmazustand unter überwiegender Radikalbildung zwecks Beschleunigung der Kontaktreaktion überführt wird. Als eine der Möglichkeiten zur Erzeugung des Hochdruckplasmas ist ein zylindrischer Hohlraumresonator angegeben, in den von einem Magnetron erzeugte Mikrowellen über einen Hohlleiter eingekoppelt werden können, der parallel zur Stirnfläche des Zylinderresonators verläuft. Nach der Plasmazündung wird die Mikrowellenstrahlung in dem Hohlleiter direkt in das Plasmagas eingekoppelt. Das Reduktionsmittel wird mit Abstand stromaufwärts von der Plasmazone in bereits gasförmigem Zustand über eine Düse in eine zugehörige Abgasleitung eingeleitet.

Der Erfindung liegt als technisches Problem die Bereitstellung einer Abgasreinigungsanlage der eingangs genannten Art zugrunde, bei der das Reduktionsmittel zur Stickoxidreduktion mit relativ geringem Aufwand in vorteilhafter Weise als Dampf dem Abgasstrom zugegeben werden kann.

Die Erfindung löst dieses Problem durch die Bereitstellung einer Abgasreinigungsanlage mit den Merkmalen des Anspruchs 1.

Bei dieser Anlage beinhaltet der im Abgasstrang stromaufwärts des Stickoxid-Reduktionskatalysators angeordnete Verdampfer einen Mikrowellengenerator zur Reduktionsmittelverdampfung. Es zeigt sich, dass damit einerseits eine ausreichende Reduktionsmittelverdampfung erzielbar ist und andererseits der Aufwand für die Bereitstellung des Verdampfers relativ gering bleibt.

Eine nach Anspruch 2 weitergebildete Abgasreinigungsanlage beinhaltet wenigstens zwei hintereinandergeschaltete Katalysatorstufen mit unterschiedlichem Ammoniak-Speicherverhalten, von denen wenigstens eine den Stickoxid-Reduktionskatalysator bildet. Es zeigt sich, dass diese Maßnahme in bestimmten Fällen zur Erzielung einer möglichst vollständigen Stickoxidreduktion von Vorteil ist, wobei je nach Einsatzfall die stromaufwärtige Stufe ein höheres oder niedrigeres Ammoniak-Speichervermögen als die stromabwärtige Stufe haben kann.

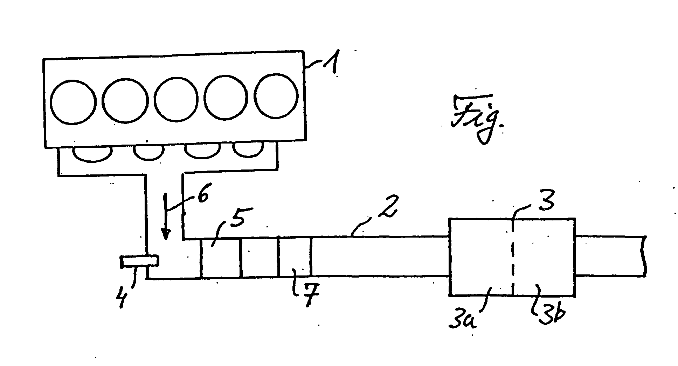

Ein vorteilhaftes Ausführungsbeispiel der Erfindung ist in der einzigen Zeichnung dargestellt und wird nachfolgend beschrieben.

Die einzige Figur zeigt ein schematisches Blockdiagramm eines Verbrennungsmotors mit zugehöriger Abgasreinigungsanlage mit Mikrowellengenerator-Verdampfer.

Der schematisch gezeigte, z. B. in einem Kraftfahrzeug verwendete Verbrennungsmotor 1 weist eine zugehörige Abgasreinigungsanlage zur Reinigung des Motorabgases insbesondere von darin eventuell enthaltenen Stickoxiden auf. Letztere treten insbesondere bei mager betriebenen Verbrennungsmotoren auf.

Für die Reinigung des Abgases von Stickoxiden beinhaltet die Abgasreinigungsanlage einen im Abgasstrang 2 des Verbrennungsmotors 1 positionierten Stickoxid-Reduktionskatalysator 3. Dieser kann ein- oder mehrstufig ausgelegt sein, wobei in der Figur beispielhaft eine zweistufige Auslegung mit einer stromaufwärtigen Stufe 3a und einer stromabwärtigen Stufe 3b gezeigt ist. Die beiden Katalysatorstufen 3a, 3b unterscheiden sich vorzugsweise in ihrem Ammoniak-Speichervermögen, wobei je nach Bedarf die stromaufwärtige Katalysatorstufe 3a ein niedrigeres oder höheres Ammoniak-Speichervermögen hat als die stromabwärtige Katalysatorstufe 3b.

Des Weiteren beinhaltet die Abgasreinigungsanlage stromaufwärts des Stickoxid-Reduktionskatalysators 3 im Abgasstrang 2 eine Reduktionsmittel-Zudosiereinrichtung, die eine Zufuhreinheit 4 und einen Verdampfer 5 aufweist. Über die Zufuhreinheit 4 wird ein Reduktionsmittel oder ein Vorprodukt desselben, z. B. fester oder flüssiger Harnstoff, von außen in den einteiligen Abgasstrang 2 eingedüst, in welchem der von den einzelnen Motorzylindem kommende, zusammengefasste Abgasstrom 6 geführt ist. Der Verdampfer 5 ist stromabwärts von der Zudosierstelle im Abgasstrang 2 positioniert und enthält als Wärmequelle einen Mikrowellengenerator, der von einem üblichen Typ ist und daher hier nicht weiter dargestellt ist. Eingespritzter Harnstoff wird unter der Wirkung der vom Mikrowellengenerator erzeugten Mikrowellenstrahlung im Verdampfer 5 zu gasförmigem Ammoniak und Kohlendioxid hydrolysiert. Zur Unterstützung der Hydrolysereaktion kann der Verdampfer 5 ein geeignetes Hydrolysekatalysatormaterial beinhalten.

Im Abgasstrangabschnitt zwischen Verdampfer 5 und Stickoxid-Reduktionskatalysator 3 ist ein Gasmischer 7 üblicher Bauart vorgesehen, durch den eine homogene Vermischung des im Verdampfer 5 verdampften Reduktionsmittels mit dem zu reinigenden Abgas erreicht wird. Zudem kann der Gasmischer 7 bei Bedarf so ausgelegt sein, dass er zusätzlich als Harnstoff-Hydrolysekatalysator fungiert und/oder eine stickoxidreduzierende Funktion ausübt. Im anschließenden Stickoxid-Reduktionskatalysator 3 erfolgt dann unter Beteiligung des dampfförmigen Reduktionsmittels die vollständige selektive chemische Reduktion der im Abgas enthaltenen Stickoxide zu Stickstoff.

Je nach Bedarf kann zudem vorgesehen sein, dass weitere Katalysatoren mit abgasreinigender Funktion, wie ein Oxidationskatalysator oder ein Dreiwege-Katalysator, seriell vor oder hinter dem Stickoxid-Reduktionskatalysator 3 angeordnet sind, sei es als eigene Katalysatorkörper oder integriert mit dem Stickoxid-Reduktionskatalysator 3 in einer gemeinsamen Katalysatorbaueinheit.

## Patentansprüche

1. Abgasreinigungsanlage zur Reinigung eines in einem Abgasstrang (2) geführten Abgasstroms (6), insbesondere für einen Kraftfahrzeug-Verbrennungsmotor (1), mit
- einem im Abgasstrang (2) angeordneten Stickoxid-Reduktionskatalysator (3) zur Reduktion von im Abgas (6) enthaltenen Stickoxiden unter Beteiligung eines in den Abgasstrang (2) eingebrachten, dampfförmigen Reduktionsmittels und
- einer Reduktionsmittel-Zudosiereinrichtung (4, 5) zur Zudosierung des Reduktionsmittels oder eines Reduktionsmittel-Vorprodukts zum Abgasstrom (6), die einen im Abgasstrang (2) stromaufwärts des Stickoxid-Reduktionskatalysators (3) angeordneten Verdampfer (5) umfasst,
**dadurch gekennzeichnet, dass**
- der Verdampfer (5) einen Mikrowellengenerator zur Reduktionsmittelverdampfung aufweist.

2. Abgasreinigungsanlage nach Anspruch 1, weiter **dadurch gekennzeichnet, dass** sie zwei oder mehrere seriell hintereinander geschaltete Katalysatorstufen (3a, 3b) mit unterschiedlichem Reduktionsmittel-Speichervermögen beinhaltet, von denen wenigstens eine den Stickoxid-Reduktionskatalysator bildet.

3. Abgasreinigungsanlage nach Anspruch 1 oder 2, weiter **dadurch gekennzeichnet, dass** die Reduktionsmittel-Zudosiereinrichtung (4, 5) eine stromauf des Verdampfers (5) angeordnete Zufuhreinheit (4) zur Eindüsung des festen oder flüssigen Reduktionsmittels in den Abgasstrang (2) umfasst.

4. Abgasreinigungsanlage nach einem der vorhergehenden Ansprüche, weiter **dadurch gekennzeichnet, dass** der Verdampfer (5) ein Hydrolysekatalysatormaterial beinhaltet.

5. Abgasreinigungsanlage nach einem der vorhergehenden Ansprüche, weiter **dadurch gekennzeichnet, dass** sie stromab des Verdampfers (5) und stromauf des Stickoxid-Reduktionskatalysators (3) einen im Abgasstrang (2) angeordneten Gasmischer (7) zur homogenen Vermischung des verdampften Reduktionsmittels umfasst.

6. Abgasreinigungsanlage nach Anspruch 5, weiter **dadurch gekennzeichnet, dass** der Gasmischer (7) zusätzlich eine Hydrolysefunktion und/oder eine stickoxidreduzierende Funktion aufweist.

7. Abgasreinigungsanlage nach einem der vorhergehenden Ansprüche, weiter **dadurch gekennzeichnet, dass** sie weitere, stromauf oder stromab des Stickoxid-Reduktionskatalysators (3) angeordnete Abgaskatalysatoren aufweist, insbesondere einen Oxidationskatalysator oder einen Dreiwege-Katalysator.

## Claims

1. Exhaust gas purification arrangement for purifying an exhaust gas stream (6) which is guided in an exhaust section (2), in particular for a motor vehicle internal combustion engine (1), having
- a nitrogen oxide reduction catalytic converter (3) arranged in the exhaust section (2) for reducing nitrogen oxides contained in the exhaust gas (6) with the aid of a reducing agent in vapour form which is introduced into the exhaust section (2), and
- a reducing agent metering device (4, 5) for metering the reducing agent or a reducing agent precursor to the exhaust gas stream (6), this device comprising an evaporator (5) arranged in the exhaust section (2) upstream of the nitrogen oxide reduction catalytic converter (3),
**characterized in that**
- the evaporator (5) has a microwave generator for evaporating the reducing agent.

2. Exhaust gas purification arrangement according to Claim 1, also **characterized in that** it includes two or more catalytic converter stages (3a, 3b) which are connected in series, have different reducing agent storage capacities and at least one of which forms the nitrogen oxide reduction catalytic converter.

3. Exhaust gas purification arrangement according to Claim 1 or 2, also **characterized in that** the reducing agent metering device (4, 5) comprises a feed unit (4) arranged upstream of the evaporator (5) for injecting the solid or liquid reducing agent into the exhaust section (2).

4. Exhaust gas purification arrangement according to one of the preceding claims, also **characterized in that** the evaporator (5) contains a hydrolysis catalyst material.

5. Exhaust gas purification arrangement according to one of the preceding claims, also **characterized in that** it comprises a gas mixer (7) arranged in the exhaust section (2) downstream of the evaporator (5) and upstream of the nitrogen oxide reduction catalytic converter (3), for homogeneous mixing of the evaporated reducing agent.

6. Exhaust gas purification arrangement according to Claim 5, also **characterized in that** the gas mixer (7) additionally has a hydrolysis function and/or a nitrogen oxide reduction function.

7. Exhaust gas purification arrangement according to one of the preceding claims, also **characterized in that** it has further exhaust gas catalytic converters, in particular an oxidation catalytic converter or a three-way catalytic converter, arranged upstream or downstream of the nitrogen oxide reduction catalytic converter (3).

## Revendications

1. Installation d'épuration de gaz d'échappement pour l'épuration d'un écoulement de gaz d'échappement (6) guidé dans un parcours (2) de gaz d'échappement, en particulier pour un moteur à combustion interne (1) de véhicule automobile, l'installation présentant :
- un catalyseur (3) de réduction des oxydes d'azote disposé dans le parcours (2) des gaz d'échappement, qui réduit les oxydes d'azote contenus dans les gaz d'échappement (6) en recourant à un agent de réduction vaporisé amené dans le parcours (2) des gaz d'échappement et
- un dispositif (4, 5) d'ajout dosé d'agent de réduction qui ajoute de manière dosée l'agent de réduction ou un précurseur d'agent de réduction dans l'écoulement (6) de gaz d'échappement et qui comprend un évaporateur (5) disposé dans le parcours (2) des gaz d'échappement en amont du catalyseur (3) de réduction des oxydes d'azote,
**caractérisée en ce que**
- l'évaporateur (5) présente un générateur de micro-ondes qui vaporise l'agent de réduction.

2. Installation d'épuration de gaz d'échappement selon la revendication 1, **caractérisée en outre en ce qu'**elle contient deux ou plusieurs étages de catalyseur (3a, 3b) raccordés en série les uns derrière les autres et qui présentent différentes capacités d'accumulation d'agent de réduction, et parmi lesquels au moins l'un forme le catalyseur de réduction des oxydes d'azote.

3. Installation d'épuration de gaz d'échappement selon les revendications 1 ou 2, **caractérisée en outre en ce que** le dispositif (4, 5) d'ajout dosé d'agent de réduction comprend une unité d'amenée.(4) disposée en amont de l'évaporateur (5) et qui injecte l'agent de réduction solide ou liquide dans le parcours (2) des gaz d'échappement.

4. Installation d'épuration de gaz d'échappement selon l'une des revendications précédentes, **caractérisée en outre en ce que** l'évaporateur (5) contient un matériau catalyseur d'hydrolyse.

5. Installation d'épuration de gaz d'échappement selon l'une des revendications précédentes, **caractérisée en outre en ce qu'**elle comporte en aval de l'évaporateur (5) et en amont du catalyseur (3) de réduction des oxydes d'azote un mélangeur de gaz (7) disposé dans le parcours (2) des gaz d'échappement et qui mélange de manière homogène l'agent de réduction vaporisé.

6. Installation d'épuration de gaz d'échappement selon la revendication 5, **caractérisée en outre en ce que** le mélangeur de gaz (7) présente en supplément une fonction d'hydrolyse et/ou une fonction de réduction des oxydes d'azote.

7. Installation d'épuration de gaz d'échappement selon l'une des revendications précédentes, **caractérisée en outre en ce qu'**elle présente plusieurs catalyseurs de gaz d'échappement disposés en amont ou en aval du catalyseur (3) de réduction des oxydes d'azote, et en particulier un catalyseur d'oxydation ou un catalyseur à trois voies.
